# EUROPEAN PATENT SPECIFICATION

(11) **EP 2 874 351 B1**
(45) Date of publication and mention of the grant of the patent: **13.09.2017**
(21) Application number: 13800155.7
(22) Date of filing: 10.07.2013
(51) Int. Cl.: H04L 12/24, H04L 12/437

(54) **CONTROL METHOD AND DEVICE FOR PROTECTING CONNECTIVITY BETWEEN ETHERNET RING NETWORK NODES, AND FIRST NODE**
STEUERVERFAHREN UND VORRICHTUNG ZUM SCHUTZ DER KONNEKTIVITÄT ZWISCHEN ETHERNET-RINGNETZWERKKNOTEN UND ERSTKNOTEN
PROCÉDÉ ET DISPOSITIF DE COMMANDE POUR PROTÉGER LA CONNECTIVITÉ ENTRE DES NOEUDS DE RÉSEAU ETHERNET EN ANNEAU, ET UN PREMIER NOEUD

(30) Priority: 18.09.2012 CN 201210346466
(43) Date of publication of application: 20.05.2015
(73) Proprietor: ZTE Corporation, Shenzhen, Guangdong 518057 (CN)
(72) Inventor: WU, Shaoyong, Shenzhen Guangdong 518057 (CN); YANG, Jin, Shenzhen Guangdong 518057 (CN); GAN, Yuxi, Shenzhen Guangdong 518057 (CN)
(74) Representative: HGF Limited
(86) International application number: PCT/CN2013/079156
(87) International publication number: WO 2013/182116

(56) References cited:
- CN-A- 101 022 390
- CN-A- 102 857 379
- JP-A- 2009 219 047
- US-A1- 2006 182 044
- US-A1- 2009 141 641
- US-A1- 2012 224 471

## Description

### Technical Field

The present invention relates to the Ethernet ring network technology, and in particular, to a control method and apparatus for protecting connectivity between Ethernet ring network nodes when there is an incompatible device in the Ethernet ring network and a first node.

### Background of the Related Art

The Ethernet develops toward the direction of multi-service carrying, and with the higher requirements on the reliability and the instantaneity of the network, etc., by some services, the Ethernet already adopts the redundancy networking mode extensively to improve the reliability of the network, to meet the demand such as the instantaneity of the service, etc. In the redundancy networking structure of the Ethernet, it is usually required that the speed of the protection switching is fast enough and the duration of the protection switching needs to be within 50ms.

At present, the technologies related to the fast protection switching are the RFC3619 standard provided by the Internet Engineering Task Force (IETF) and the G.8032 standard provided by the International Telecommunications Union (ITU-T), etc.

In the G.8032 standard provided by the ITU-T, the automatic protection switchover protocol and mechanism are defined for the Ethernet layer of the ring topology Ethernet, and such automatic protection switchover method is suitable for the ring topology Ethernet. The implementation procedure of the method is as follows: in the ring topology Ethernet, a section of link is selected as the ring protection link; when the links of the Ethernet ring network are all fault-free, there is at least one node which blocks the port connected with the ring protection link in the two adjacent nodes of the ring protection link, to prevent the protected data from passing through the ring protection link; in this way, there is only the unique communication path between any two nodes on the Ethernet ring network, so the closed loop in the communication path will not be generated in the Ethernet ring network, to prevent the closed loop and the network storm; when the link in the Ethernet ring network fails and the fault link is not the ring protection link, the node which originally blocks the port connected to the ring protection link opens the blocked port, to make the protected data be able to pass through the ring protection link, thus make the communication path be established again and the reliability of the network be improved.

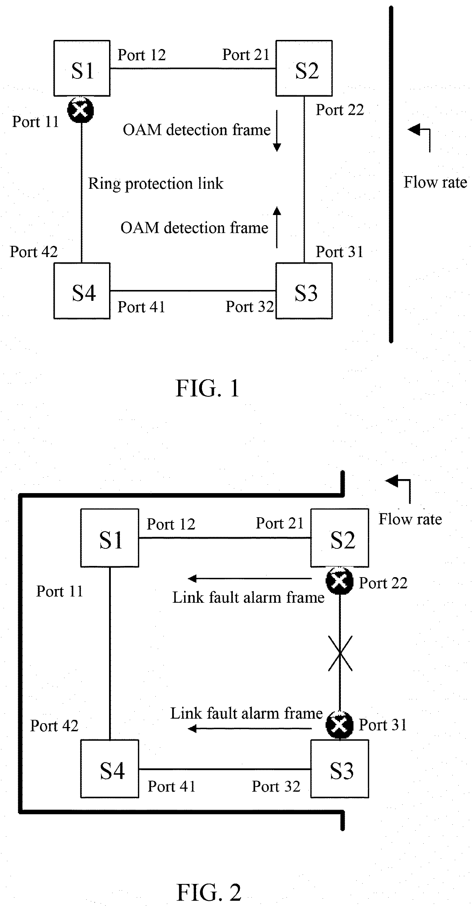

FIG. 1 is a structure diagram of an Ethernet ring network based on the G.8032 standard. As shown in FIG. 1, the nodes S1, S2, S3 and S4 make up the Ethernet ring network, the link between the nodes S 1 and S4 is the ring protection link, the node S 1 is the node affiliated to the ring protection link, and the node S1 controls the blocking and opening of the port 11 to be able to block and open the ring protection link. When the links of the Ethernet ring network are all fault-free, the node S1 blocks the port 11, to prevent the protected data from passing through the ring protection link; at this moment the communication path of the flow rate of the protected data between the nodes S2 and S3 is only S2<-> S3, while it cannot be S2<-> S1<-> S4<-> S3. The Operation Administration and Maintenance (OAM) domain is set up among the adjacent nodes, to detect the connectivity of the link, and the basic principle of the OAM detection is that, two nodes of the region send the detection frame to the opposite end node mutually; and if the node does not receive the detection frame of the opposite end within a period of time, then the link fault is detected; if the node receives the detection frame of the opposite end again after detecting the link fault, then the link recovery is detected.

Fig. 2 is a structure diagram of an Ethernet ring network after the link fails in FIG. 1. As shown in FIG. 2, supposing that the link between the node S2 and the node S3 fails, then the node S2 and the node S3, after detecting the failure, block the port 22 and the port 31 connected with the failed link respectively, and send the link fault alarm protocol frame to notify other nodes supporting the Ethernet ring network protection technology to perform the protection switchover; after the node S 1 affiliated to the ring protection link receives the link fault alarm protocol frame, the blocked port 11 connected to the ring protection link is opened, and each node on the Ethernet ring network refreshes the address forwarding table, to realize the network protection switchover, and the protected data can pass through the opened ring protection link. Now the communication path of the protected data between the node S2 and the node S3 is S2<-> S1<-> S4<-> S3. Here, the link fault is one situation causing the protection switching, and in real application, it can also include the situations, such as, the manual switchover, the switchover by force, etc.

Though the technology, such as the Ethernet ring network of the G.8032 standard, etc., provides the automatic protection switchover protocol and mechanism, the launching time of the G.8032 is later than the application time of the Ethernet, so in the real network, the scene that the new device supporting the G.8032 and the old device not supporting the G.8032 make the networking together is very general; there are often nodes that do not support the G.8032 standard in the Ethernet ring network, which leads to that the butt joint among the nodes is incompatible and the automatic protection switchover of the Ethernet ring network cannot be realized.

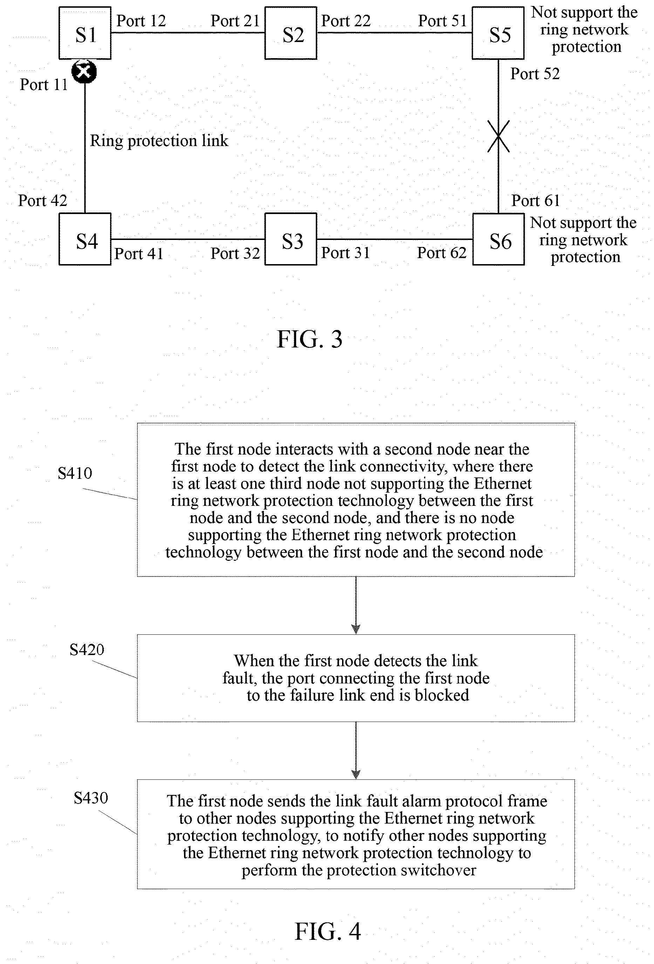

The nodes S1, S2, S5, S6, S3 and S4 make up the Ethernet ring network in FIG. 3; except the nodes S5 and S6, other nodes support the Ethernet ring network protection technology of the G.8032 standard, the link between the nodes S1 and S4 is the ring protection link, the node S1 is the node affiliated to the ring protection link, and the node S 1 controls the blocking and opening of the port 11 to be able to block and open the ring protection link. When the links of the Ethernet ring network are all fault-free, the node S1 blocks the port 11, to prevent the protected data from passing through the ring protection link. When the link between the node S5 and node S6 fails, because the nodes S5 and S6 do not support the Ethernet ring network protection technology of the G.8032 standard and will not send the link fault alarm protocol frame to other nodes, other nodes will not know the fault state, and the S1 affiliated to the ring protection link will not open the blocked port 11 connected with the ring protection link either, thus, two break-offs, the port 11 of the node S1 and the link S5<-> S6, appear in the ring:, which causes the flow rate of the protected data break off.

So in the real application of the network, the scene that the nodes supporting the Ethernet ring network protection technology and the nodes not supporting the Ethernet ring network protection technology make the networking together is more and more general; if there is no technology processing the butt joint to the incompatible Ethernet ring network node, the application of the network protection switchover technology will be obstructed greatly, and even the network failure is caused, so a technology processing the butt joint to the incompatible Ethernet ring network node is required, to ensure the maximum connectivity of the network.

Further relevant technologies are also known from US 2012/224471 A1 which relates to a protection switching method of a node having communication failure in a ring, in a communication network, and US 2006/182044 A1 which relates to a method of dealing with interruptions in a data network with a ring structure.

### Content of the Invention

The technical problem that the embodiment of the present invention requires to solve is to provide a technology for processing the butt joint incompatible with the Ethernet ring network protection technology, which can perform the protection switchover and ensure the maximum connectivity of the network when there is the node not supporting the Ethernet ring network protection technology in the Ethernet ring network.

The above problem is solved by a control method for protecting connectivity between Ethernet ring network nodes according to claim 1, a control apparatus for protecting connectivity between Ethernet ring network nodes according to claim 4, and a node generating and using Operation Administration and Maintenance, OAM, detection frames for link fault detection according to claim 7.

Also provided is a control method for protecting connectivity between Ethernet ring network nodes, used for a first node supporting an Ethernet ring network protection technology, comprising: interacting with a second node supporting the Ethernet ring network protection technology and near the first node, to detect link connectivity, where there is at least one third node not supporting the Ethernet ring network protection technology between the first node and the second node, and there is no node supporting the Ethernet ring network protection technology between the first node and the second node; when detecting a link fault, blocking a port connecting the first node to a failure link end; and sending a link fault alarm protocol frame to other nodes supporting the Ethernet ring network protection technology in the Ethernet ring network, to notify other nodes supporting the Ethernet ring network protection technology to perform protection switchover.

Alternatively, in the above-mentioned control method, the link fault alarm protocol frame comprises a first node number of the first node; and the control method further comprises: after receiving the link fault alarm protocol frame sent by the second node when detecting the link fault, comparing a second node number of the second node carried in the received link fault alarm protocol frame with the first node number, judging whether a comparison result meets a preset condition, and if the comparison result meets the preset condition, then opening a port blocked by the first node supporting the Ethernet ring network protection technology and connected to the failure link end.

Alternatively, in the above-mentioned control method, the preset condition is that the second node number is greater than the first node number or the second node number is smaller than the first node number.

Also provided is a control apparatus for protecting connectivity between Ethernet ring network nodes, used for a first node supporting an Ethernet ring network protection technology, comprising: a link connectivity detection unit, configured to interact with a second node supporting the Ethernet ring network protection technology and near the first node, to detect link connectivity, where there is at least one third node not supporting the Ethernet ring network protection technology between the first node and the second node, and there is no node supporting the Ethernet ring network protection technology between the first node and the second node; a port blocking unit, configured to: when detecting a link fault, block a port connecting the first node to a failure link end; and a link fault alarm protocol frame transceiving unit, configured for the first node supporting the Ethernet ring network protection technology to send a link fault alarm protocol frame to notify other nodes supporting the Ethernet ring network protection technology to perform protection switchover.

Alternatively, in the above-mentioned control apparatus, the link fault alarm protocol frame comprises a first node number of the first node; and the control apparatus further comprises: a comparison and judgment control unit, configured to: after receiving the link fault alarm protocol frame sent by the second node when detecting the link fault, compare a second node number of the second node carried in the received link fault alarm protocol frame with the first node number, judge whether a comparison result meets a preset condition, and if the comparison result meets the preset condition, then open a port blocked by the first node supporting the Ethernet ring network protection technology and connected to the failure link end.

Alternatively, in the above-mentioned control apparatus, the preset condition is that the second node number is greater than the first node number or the second node number is smaller than the first node number.

Also provided is a node device comprising the above-mentioned control apparatus for protecting the connectivity between the Ethernet ring network nodes.

By adopting the method and apparatus of the embodiment of the present invention, when the link connected to the node not supporting Ethernet ring network protection technology fails, nodes supporting the Ethernet ring network protection technology adjacent to the node not supporting Ethernet ring network protection technology can detect the link fault through the connectivity detection, to realize the network protection switchover; and the protected data can pass through the opened ring protection link, thus ensuring the connectivity of the service data. At the same time, after the two nodes supporting the Ethernet ring network protection technology and detecting the link fault receive the link fault alarm protocol frame from each other mutually, the node of which the node number is smaller (or uniquely greater than) opens the blocked port, and the node not supporting the Ethernet ring network protection technology transmits the service data through the opened port with other nodes. So the embodiment of the present invention can not only make the incompatible Ethernet ring network node be able to process the butt joint, but also ensures the maximum connectivity of the network.

### Brief Description of Drawings

FIG. 1 is a structure diagram of an Ethernet ring network based on a G.8032 standard;
FIG. 2 is a structure diagram of an Ethernet ring network after a link fails;
FIG. 3 is a structure diagram that there is a node not supporting an Ethernet ring network protection technology in the Ethernet ring network;
FIG. 4 is a flow chart of a control method for protecting connectivity between Ethernet ring network nodes according to an embodiment of the present invention;
FIG. 5 is a structure diagram of a control apparatus for protecting connectivity between Ethernet ring network nodes according to an embodiment of the present invention;
FIG. 6 is a structure diagram of an Ethernet ring network according to an embodiment of the present invention;
FIG. 7 is a processing diagram of a failure in an Ethernet ring network according to an embodiment of the present invention;
FIG. 8 is a processing diagram of ensuring the maximum connectivity of the network in an Ethernet ring network according to an embodiment of the present invention;
FIG. 9 is a structure diagram of an Ethernet ring network according to another embodiment of the present invention;
FIG. 10 is a processing diagram of a failure in an Ethernet ring network according to another embodiment of the present invention;
FIG. 11 is a processing diagram of ensuring the maximum connectivity of the network in an Ethernet ring network according to another embodiment of the present invention.

### Preferred Embodiments of the Present Invention

The present invention is described in detail with reference to the accompanying drawings and the embodiments hereinafter.

### Embodiment one

The control method for protecting connectivity between Ethernet ring network nodes provided by the embodiment of the present invention is shown in FIG. 4 specifically, including the following steps.

In step S410, the first node supporting an Ethernet ring network protection technology interacts with a second node supporting the Ethernet ring network protection technology and near the first node, to detect link connectivity, where there is at least one third node not supporting the Ethernet ring network protection technology between the first node and the second node, and there is no node supporting the Ethernet ring network protection technology between the first node and the second node.

In the Ethernet ring network, if two adjacent nodes support the Ethernet ring network protection technology, then the link connectivity is detected between these two adjacent nodes.

If the two adjacent nodes are not all supporting the Ethernet ring network protection technology, then between the two nodes supporting the Ethernet ring network protection technology adjacent to the node not supporting the Ethernet ring network protection technology, the link connectivity is detected through the mode of penetrating the node not supporting the Ethernet ring network protection technology.

In step S420, when the first node supporting the Ethernet ring network protection technology detects the link fault, the port connecting the first node to the failure link end is blocked.

In step S430, the first node supporting the Ethernet ring network protection technology sends the link fault alarm protocol frame to other nodes supporting the Ethernet ring network protection technology, to notify other nodes supporting the Ethernet ring network protection technology to perform the protection switchover.

In the step, the link fault alarm protocol frame sent by the first node supporting the Ethernet ring network protection technology to other nodes supporting the Ethernet ring network protection technology includes the node number of the first node.

The connection among most nodes can be realized through the above-mentioned mode. While in order to improve the connection rate, the specific embodiment of the present invention further includes the following step.

After receiving the link fault alarm protocol frame sent by the second node supporting the Ethernet ring network protection technology when the second node detects the link fault, the first node supporting the Ethernet ring network protection technology compares the second node number of the second node carried in the received link fault alarm protocol frame with the first node number, judges whether a comparison result meets a preset condition, and if the comparison result meets the preset condition, then opens the port blocked by the first node supporting the Ethernet ring network protection technology and connected to the failure link end.

The preset condition is that the received second node number sent by the second node supporting the Ethernet ring network protection technology is greater or smaller than the first node number of the first node supporting the Ethernet ring network protection technology.

Certainly, it should be understood that all nodes can use the same judgment criterion.

By adopting the method provided by the embodiment of the present invention, when the link connected to the node not supporting Ethernet ring network protection technology fails, the adjacent node supporting the Ethernet ring network protection technology node can detect the link fault through the connectivity detection, and then blocks the failure port, and sends the link fault alarm protocol frame to notify other nodes supporting the Ethernet ring network protection technology to perform the protection switchover; after the node affiliated to the ring protection link knows the link fault, the blocked port connected with the ring protection link is opened, and each node on the Ethernet ring network refreshes the address forwarding table, to realize the network protection switchover; and the protected data can pass through the opened ring protection link, to ensure the connectivity of the service data. But because both two nodes supporting the Ethernet ring network protection technology and detecting the link fault block the failure ports, the nodes not supporting the Ethernet ring network protection technology are unable to transmit the service data with other nodes, which cannot ensure the maximum connectivity of the network. After the two nodes supporting the Ethernet ring network protection technology and detecting the link fault receive the link fault alarm protocol frame from each other mutually, if it is found that its own node number is smaller (or uniquely greater than) the node number of the node of the other side, then the node opens the blocked port, and the node not supporting the Ethernet ring network protection technology transmits the service data through the opened port with other nodes. So the embodiment of the present invention can not only make the incompatible Ethernet ring network node be able to process the butt joint, but also ensures the maximum connectivity of the network.

### Embodiment two

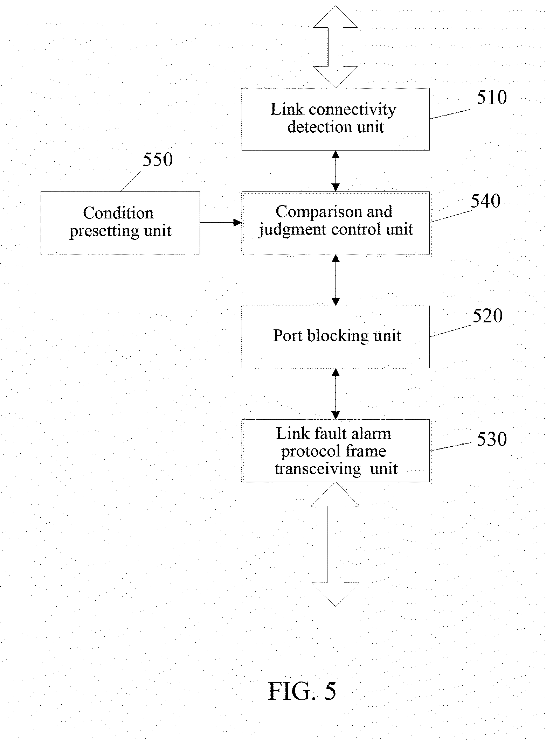

The control apparatus for protecting the connectivity between the Ethernet ring network nodes provided by the embodiment of the present invention is used for the first node, and its specific structure is as shown in FIG. 5, and the apparatus includes the following units.

The link connectivity detection unit 510 is configured to detect the link connectivity between the first node supporting the Ethernet ring network protection technology and the second node supporting the Ethernet ring network protection technology and near the first node, wherein, there is at least one third node not supporting the Ethernet ring network protection technology between the first node and the second node, and there is no node supporting the Ethernet ring network protection technology between the first node and the second node.

The port blocking unit 520 is configured to: when the link connectivity detection unit detects that the link fault occurs between the two adjacent first node and second node supporting the Ethernet ring network protection technology, block the port connecting the first node to the failure link end.

The link fault alarm protocol frame transceiving unit 530 is configured for the first node supporting the Ethernet ring network protection technology to send the link fault alarm protocol frame to notify other nodes supporting the Ethernet ring network protection technology to perform the protection switchover.

The link fault alarm protocol frame transceiving unit 530 includes the node number of the first node in the link fault alarm protocol frame sent to other nodes supporting the Ethernet ring network protection technology.

The control apparatus provided by the embodiment of the present invention further includes the following units.

The comparison and judgment control unit 540 is configured to: after the first node supporting the Ethernet ring network protection technology receives the link fault alarm protocol frame sent by the second node supporting the Ethernet ring network protection technology when detecting the link fault, compare the second node number of the second node carried in the detected link fault alarm protocol frame with its own first node number, judge whether the comparison result meets a preset condition, and if the comparison result meets the preset condition, then open the port blocked by the first node supporting the Ethernet ring network protection technology and connected to the failure link end.

The condition presetting unit 550 is configured to preset the condition, and the preset condition is that the received second node number sent by the second node supporting the Ethernet ring network protection technology is greater or smaller than the first node number of the first node supporting the Ethernet ring network protection technology.

The embodiment of the present invention provides the control apparatus for protecting the connectivity between the Ethernet ring network nodes, when the link connected to the node not supporting Ethernet ring network protection technology fails, the node supporting the Ethernet ring network protection technology node adjacent to the node not supporting Ethernet ring network protection technology can detect the link fault through the connectivity detection, to realize the network protection switchover; and the protected data can pass through the opened ring protection link, to ensure the connectivity of the service data.

### Embodiment three

In order to describe the control method and apparatus for protecting the connectivity between the Ethernet ring network nodes provided by the embodiment of the present invention much more clear, another specific preferred embodiment is provided from the overall situation for explanation.

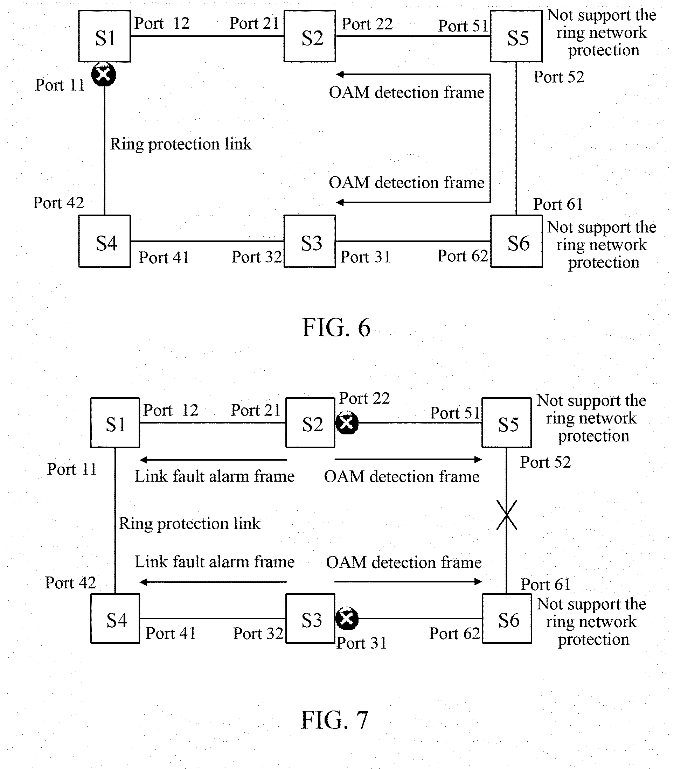

As shown in FIG. 6, the nodes S1, S2, S5, S6, S3 and S4 make up the Ethernet ring network in FIG. 6; except the nodes S5 and S6, other nodes support the Ethernet ring network protection technology of the G.8032 standard, the link between the nodes S1 and S4 is the ring protection link, the node S1 is the node affiliated to the ring protection link, and the node S1 controls the blocking and opening of the port 11 to be able to block and open the ring protection link. When the links of the Ethernet ring network are all fault-free, the node S 1 blocks the port 11, to prevent the protected data from passing through the ring protection link.

Because the nodes S5 and S6 do not support the Ethernet ring network protection technology, the technology for detecting the link connectivity between the nodes S2 and S3 supporting the Ethernet ring network protection technology adjacent to the nodes S5 and S6 respectively is launched according to the technology of the embodiment of the present invention.

As shown in FIG. 7, in FIG. 7, when the link between the node S5 and the node S6 fails, the OAM detection frame between the nodes S2 and S3 cannot be connected, so the nodes S2 and S3 detect the link fault, and block the ports 22 and 31 connected to the failure link end respectively, and send the link fault alarm protocol frame to notify other nodes supporting the Ethernet ring network protection technology to perform the protection switchover, and their own node numbers are included in the link fault alarm protocol frame.

After the node S 1 affiliated to the ring protection link receives the link fault alarm protocol frame, it opens the blocked port 11 connected with the ring protection link, and each node on the Ethernet ring network refreshes the address forwarding table, to realize the network protection switchover, and the protected data can pass through the opened ring protection link, so the node S2<-> S1 <-> S4<-> S3 can be connected therebetween, but because both the nodes S2 and S3 block the port connected with the failure link end, the nodes S5 and S6 cannot connect to other nodes.

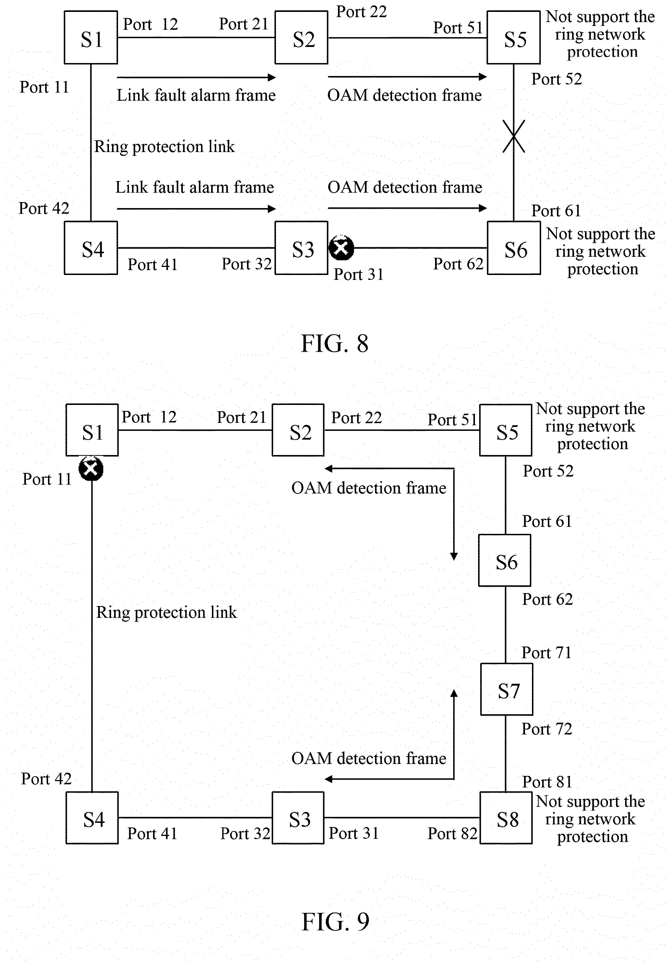

As shown in FIG. 8, after the node S3 receives the link fault alarm protocol frame of the node S2 in FIG. 8, because the node number (2) of the node S2 included in the protocol frame is smaller than the node number of the node S3 (supposing as 3), the node S3 keeps the port 31 as the blocked state according to the condition preset by the method of the embodiment of the present invention. After the node S2 receives the link fault alarm protocol frame of the node S3, because the node number of the node S3 (supposing as 3) included in the protocol frame is greater than the node number of the node S2 (supposing as 2), and the node S2 detects the link fault and the node S2 already blocks the port 22 connected with the failure link end, the node S2 opens the blocked port 22 connected with the failure link end according to the condition preset by the method of the embodiment of the present invention. After the port 22 of the node S2 is opened, the node S5 can be connected with other nodes, to ensure the maximum connectivity of the network.

### Embodiment four

In order to describe the control method and apparatus for protecting the connectivity between the Ethernet ring network nodes provided by the embodiment of the present invention more clear, another specific preferred embodiment is provided from the overall situation for explanation.

FIG. 9 - FIG. 11 are one more complex Ethernet ring network, wherein, the nodes S1, S2, S5, S6, S7, S8, S3 and S4 make up the Ethernet ring network; except the nodes S5 and S8, other nodes support the Ethernet ring network protection technology of the G.8032 standard, the link between the nodes S 1 and S4 is the ring protection link, the node S 1 is the node affiliated to the ring protection link, and the node S 1 controls the blocking and opening of the port 11 to be able to block and open the ring protection link. When the links of the Ethernet ring network are all fault-free, the node S1 blocks the port 11, to prevent the protected data from passing through the ring protection link.

Because the nodes S5 and S8 do not support the Ethernet ring network protection technology, the technology for detecting the link connectivity is used between the nodes S2 and S6 supporting the Ethernet ring network protection technology adjacent to the nodes S5 according to the method of the embodiment of the present invention. The technology for detecting the link connectivity is usedbetween the nodes S3 and S7 supporting the Ethernet ring network protection technology adjacent to the nodes S8.

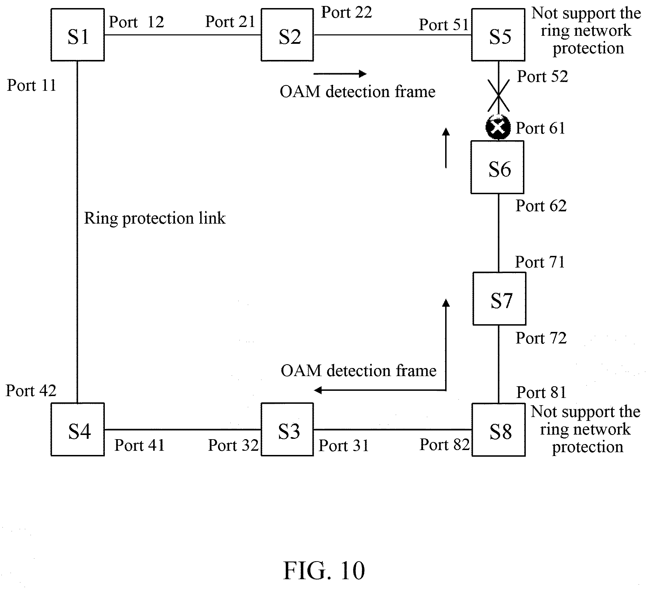

In FIG. 10, when the link between the node S5 and the node S6 fails, the OAM detection frame can not pass through between the nodes S2 and S6, so the nodes S2 and S6 detect the link fault, and block the ports 22 and 61 connected to the failure link end respectively, and send the link fault alarm protocol frame to notify other nodes supporting the Ethernet ring network protection technology to perform the protection switchover, and the node numbers of the node S2 and the node S6 are included in the link fault alarm protocol frame. After the node S1 affiliated to the ring protection link receives the link fault alarm protocol frame, it opens the blocked port 11 connected with the ring protection link, and each node on the Ethernet ring network refreshes the address forwarding table, to realize the network protection switchover, and the protected data can pass through the opened ring protection link. After the node S6 receives the link fault alarm protocol frame of the node S2, because the node number (2) of the node S2 included in the protocol frame is smaller than the node number of the node S6 (supposing as 6), the node S6 keeps the port 61 as the blocked state according to the condition preset by the method of the embodiment of the present invention. After the node S2 receives the link fault alarm protocol frame of the node S6, because the node number of the node S6 included in the protocol frame is greater than the node number of the node S2, and the node S2 detects the link fault and the node S2 already blocks the port 22 connected with the failure link end, the node S2 opens the blocked port 22 connected with the failure link end according to the condition preset by the method of the embodiment of the present invention. After the port 22 of the node S2 is opened, the node S5 can be connected with other nodes, to ensure the maximum connectivity of the network.

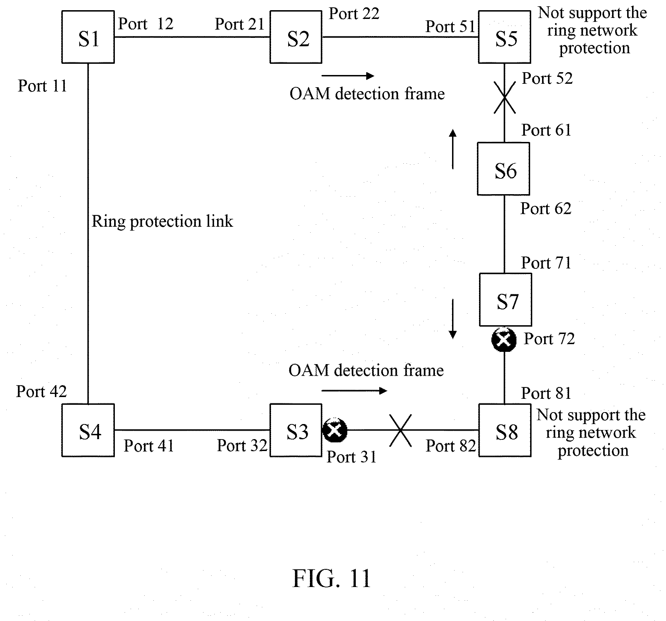

In FIG. 11, based on FIG. 10, when the link between the node S3 and the node S8 fails, the OAM detection frame can not pass through between the nodes S3 and S7, so the nodes S3 and S7 detect the link fault, and block the ports 31 and 72 connected to the failure link end respectively, and send the link fault alarm protocol frame to notify other nodes supporting the Ethernet ring network protection technology to perform the protection switchover, and include their own node numbers in the link fault alarm protocol frame. After the node S7 receives the link fault alarm protocol frame of the node S3, because the node number of the node S3 included in the protocol frame is smaller than the node number of the node S7, the node S7 keeps the port 72 as the blocked state according to the condition preset by the embodiment of the present invention. After the node S3 receives the link fault alarm protocol frame of the node S7, because the node number of the node S7 included in the protocol frame is greater than the node number of the node S3, and the node S3 detects the link fault and the node S3 already blocks the port 31 connected with the failure link end, the node S3 opens the blocked port 31 connected with the failure link end according to the condition preset by the embodiment of the present invention.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

It should be explained finally that, the above-mentioned embodiments are only used to illustrate the technical scheme of the present invention while not to limit. Those skilled in the art should understand that they can make the modifications and equivalents according to the technical scheme of the present invention without departing from the spirit and scope of the present invention, which should be embodied in the scope of the appending claims of the present invention.

### Industrial Applicability

By adopting the method and apparatus of the embodiment of the present invention, when the link connected to the node not supporting Ethernet ring network protection technology fails, the adjacent node supporting the Ethernet ring network protection technology node can detect the link fault through the connectivity detection, to realize the network protection switchover; and the protected data can pass through the opened ring protection link, to ensure the connectivity of the service data. At the same time, after the two nodes supporting the Ethernet ring network protection technology and detecting the link fault receive the link fault alarm protocol frame of the other side mutually, the node of which the node number is smaller (or uniquely greater than) opens the blocked port, and the node not supporting the Ethernet ring network protection technology transmits the service data through the opened port with other nodes. So the embodiment of the present invention not only can make the incompatible Ethernet ring network node be able to process the butt joint, but also ensures the maximum connectivity of the network.

## Claims

1. A control method for protecting connectivity between Ethernet ring network nodes including a plurality of nodes generating and using Operation Administration and Maintenance, OAM, detection frames for link fault detection and a plurality of nodes transparent forwarding the OAM detection frames used for link fault detection, **characterized in that** the control method comprises:
a first node generating and using OAM detection frames for link fault detection interacting with a second node generating and using OAM detection frames for link fault detection by the OAM detection frames to detect link connectivity, wherein there is at least one node transparent forwarding the OAM detection frames used for link fault detection between the first node and the second node, and there is no other node generating and using OAM detection frames for link fault detection between the first node and the second node;
when the first node and the second node detect a link fault by not receiving the OAM detection frame, blocking a port of the first node and a port of the second node, wherein both of the two ports are connected to two ends of a link with the detected link fault respectively, and wherein the detected link fault occurs on at least one of the following link: a) a link between the first node and the node transparent forwarding the OAM detection frames used for link fault detection between the first node and the second node, b) a link between the second node and the node transparent forwarding the OAM detection frames used for link fault detection between the first node and the second node, and c) a link between two nodes transparent forwarding the OAM detection frames used for link fault detection between the first node and the second node; and
the first node and the second node sending link fault alarm protocol frames respectively to other nodes generating and using OAM detection frames for link fault detection in the Ethernet ring network, to notify a master node to perform protection switchover, wherein the master node belongs to a ring protection link and is selected from the nodes generating and using OAM detection frames for link fault detection except for the first node and the second node.

2. The control method according to claim 1, further comprising:
the first node, after receiving the link fault alarm protocol frame sent by the second node when detecting the link fault, comparing a second node number of the second node carried in the received link fault alarm protocol frame sent by the second node with a first node number of the first node, judging whether a first comparison result meets a preset condition, and if the first comparison result meets the preset condition, then opening the port blocked by the first node and connected to one end of the link with the detected link fault; or
the second node, after receiving the link fault alarm protocol frame sent by the first node when detecting the link fault, comparing a first node number of the first node carried in the received link fault alarm protocol frame sent by the first node with a second node number of the second node, judging whether a second comparison result meets the preset condition, and if the second comparison result meets the preset condition, then opening the port blocked by the second node and connected to the other end of the link with the detected link fault.

3. The control method according to claim 2, wherein, the preset condition is that the node number carried in the received link fault alarm protocol frame is greater than a local node number, a local node detects the link fault and the local node already blocks the port connected to the end of the link with the detected link fault, wherein the local node is the node performing the comparing process.

4. A control apparatus for protecting connectivity between Ethernet ring network nodes including a plurality of nodes generating and using Operation Administration and Maintenance, OAM, detection frames for link fault detection and a plurality of nodes transparent forwarding the OAM detection frames used for link fault detection, **characterized in that** the control apparatus comprises:
a first node generating and using OAM detection frames for link fault detection and a second node generating and using OAM detection frames for link fault detection, wherein there is at least one node transparent forwarding the OAM detection frames used for link fault detection between the first node and the second node, and there is no other node generating and using OAM detection frames for link fault detection between the first node and the second node; and wherein both of the first node and the second node comprise a link connectivity detection unit (510), a port blocking unit (520) and a link fault alarm protocol frame transceiving unit (530) respectively;
wherein,
the link connectivity detection units (510) in both of the first node and the second node are configured to interact with each other to detect link connectivity by sending and receiving the OAM detection frames,
the port blocking units (520) in both of the first node and the second node are configured as that: when the link connectivity detection unit (510) detects a link fault by not receiving the OAM detection frame, the port blocking unit (520) in the first node blocks a port of the first node connected to one end of a link with the detected link fault, and the port blocking unit (520) in the second node blocks a port of the second node connected to the other end of the link with the detected link fault; wherein the detected link fault occurs on at least one of the following link: a) a link between the first node and the node transparent forwarding the OAM detection frames used for link fault detection between the first node and the second node, b) a link between the second node and the node transparent forwarding the OAM detection frames used for link fault detection between the first node and the second node, and c) a link between two nodes transparent forwarding the OAM detection frames used for link fault detection between the first node and the second node; and
the link fault alarm protocol frame transceiving units (530) in both of the first node and the second node are configured to send link fault alarm protocol frames respectively to other nodes generating and using OAM detection frames for link fault detection to notify a master node to perform protection switchover, wherein the master node belongs to a ring protection link and is selected from the nodes generating and using OAM detection frames for link fault detection except for the first node and the second node.

5. The control apparatus according to claim 4, wherein, both of the first node and the second node further comprise a comparison and judgment control unit (540), wherein,
the comparison and judgment control unit (540) in the first node is configured to: after receiving the link fault alarm protocol frame sent by the second node when detecting the link fault, compare a second node number of the second node carried in the received link fault alarm protocol frame sent by the second node with a first node number of the first node, judge whether a first comparison result meets a preset condition, and if the first comparison result meets the preset condition, then open the port blocked by the first node and connected to the one end of the link with the detected link fault; or
the comparison and judgment control unit (540) in the second node is configured to: after receiving the link fault alarm protocol frame sent by the first node when detecting the link fault, compare a first node number of the first node carried in the received link fault alarm protocol frame sent by the first node with a second node number of the second node, judge whether a second comparison result meets the preset condition, and if the second comparison result meets the preset condition, then open the port blocked by the second node and connected to the other end of the link with the detected link fault.

6. The control apparatus according to claim 5, wherein, the preset condition is that the node number carried in the received link fault alarm protocol frame is greater than a local node number, a local node detects the failure link and the local node already blocks the port connected to the end of the link with the detected link fault, wherein the local node is the node performing the comparing process.

7. A node generating and using Operation Administration and Maintenance, OAM, detection frames for link fault detection, configured to interact with another node generating and using OAM detection frames for link fault detection to detect link connectivity between Ethernet ring network nodes;
wherein, the Ethernet ring network nodes include a plurality of nodes generating and using OAM detection frames for link fault detection and a plurality of nodes transparent forwarding the OAM detection frames used for link fault detection; and wherein there is at least one node transparent forwarding the OAM detection frames used for link fault detection between said node and said another node, and there is no other node generating and using OAM detection frames for link fault detection between said node and said another node;
said node generating and using OAM detection frames for link fault detection comprising: a link connectivity detection unit (510), a port blocking unit (520) and a link fault alarm protocol frame transceiving unit (530), wherein:
the link connectivity detection unit (510) is configured to interact with said another node to detect link connectivity by sending and receiving the OAM detection frames;
the port blocking unit (520) is configured to, when the link connectivity detection unit (510) detects a link fault by not receiving the OAM detection frame, block a port of said node, wherein the port of said node and a port of said another node are connected to two ends of a link with the detected link fault respectively, and wherein the detected link fault occurs on at least one of the following link: a) a link between the first node and the node transparent forwarding the OAM detection frames used for link fault detection between the first node and the second node, b) a link between the second node and the node transparent forwarding the OAM detection frames used for link fault detection between the first node and the second node, and c) a link between two nodes transparent forwarding the OAM detection frames used for link fault detection between the first node and the second node; and
the link fault alarm protocol frame transceiving unit (530) is configured to, send link fault alarm protocol frames respectively to other nodes generating and using OAM detection frames for link fault detection to notify a master node to perform protection switchover, wherein the master node belongs to a ring protection link and is selected from the nodes generating and using OAM detection frames for link fault detection except for said node and said another node.

## Patentansprüche

1. Ein Steuerungsverfahren zum Schützen von Konnektivität zwischen Ethernet-Ringnetzwerkknoten einschließlich einer Vielzahl von Knoten, die Operationsverwaltungs- und Wartungs-, OAM-, -Erkennungsrahmen für eine Verbindungsfehlererkennung und eine Vielzahl von Knoten erzeugen und verwenden, welche die für die Verbindungsfehlererkennung verwendeten OAM-Erkennungsrahmen transparent weiterleiten, **dadurch gekennzeichnet, dass** das Steuerungsverfahren Folgendes umfasst:
einen ersten Knoten, der OAM-Erkennungsrahmen für die Verbindungsfehlererkennung erzeugt und verwendet, die mit einem zweiten Knoten zusammenwirken, welcher OAM-Erkennungsrahmen für die Verbindungsfehlererkennung durch die OAM-Erkennungsrahmen erzeugt und verwendet, um eine Verbindungskonnektivität zu erkennen, wobei mindestens ein Knoten vorhanden ist, der die OAM-Erkennungsrahmen, welche für eine Verbindungsfehlererkennung zwischen dem ersten Knoten und dem zweiten Knoten verwendet werden, transparent weiterleitet, und kein anderer Knoten vorhanden ist, der OAM-Erkennungsrahmen für die Verbindungsfehlererkennung zwischen dem ersten Knoten und dem zweiten Knoten erzeugt und verwendet;
sobald der erste Knoten und der zweite Knoten einen Verbindungsfehler erkennen, indem sie den OAM-Erkennungsrahmen nicht empfangen, einen Anschluss des ersten Knotens und einen Anschluss des zweiten Knotens blockieren, wobei beide der zwei Anschlüsse mit den jeweiligen zwei Enden einer Verbindung mit dem festgestellten Verbindungsfehler verbunden sind, und wobei der erkannte Verbindungsfehler an mindestens einer der folgenden Verbindungen auftritt: a) an einer Verbindung zwischen dem ersten Knoten und dem Knoten, welcher die OAM-Erkennungsrahmen, die für die Verbindungsfehlererkennung zwischen dem ersten Knoten und dem zweiten Knoten verwendeten werden, transparent weiterleitet, und b) eine Verbindung zwischen dem zweiten Knoten und dem Knoten, welcher die OAM-Erkennungsrahmen, die für die Verbindungsfehlererkennung zwischen dem ersten Knoten und dem zweiten Knoten verwendet werden, transparent weiterleitet, und c) eine Verbindung zwischen zwei Knoten, welche die für die Verbindungsfehlererkennung verwendeten OAM-Erkennungsrahmen zwischen dem ersten Knoten und dem zweiten Knoten transparent weiterleiten, und
wobei der erste Knoten und der zweite Knoten Verbindungsfehler-Alarmprotokollrahmen jeweils an andere Knoten senden, welche OAM-Erkennungsrahmen zur Verbindungsfehlererkennung im Ethernet-Ringnetzwerk erzeugen und verwenden, um einen Masterknoten zu benachrichtigen, eine Schutzumschaltung durchzuführen, wobei der Masterknoten zu einer Ring-Schutzverbindung gehört und aus den Knoten ausgewählt ist, welche OAM-Erkennungsrahmen für die Verbindungsfehlererkennung, mit Ausnahme des ersten Knotens und des zweiten Knotens, erzeugen und verwenden.

2. Verfahren nach Anspruch 1, ferner umfassend:
den ersten Knoten, der nach dem Empfangen des Verbindungsfehler-Alarmprotokollrahmens, der von dem zweiten Knoten gesendet wird, sobald er den Verbindungsfehler erkennt, eine zweite Knotennummer des zweiten Knotens, die in dem empfangenen Verbindungsfehler-Alarmprotokollrahmen übertragen wird, welcher von dem zweiten Knoten gesendet wird, mit einer ersten Knotennummer des ersten Knotens vergleicht, beurteilt, ob ein erstes Vergleichsergebnis eine voreingestellte Bedingung erfüllt, und wenn das erste Vergleichsergebnis die voreingestellte Bedingung erfüllt, dann den Anschluss öffnet, der durch den ersten Knoten blockiert ist und mit einem Ende der Verbindung mit dem erkannten Verbindungsfehler verbunden ist, oder
den zweiten Knoten, der nach dem Empfangen des Verbindungsfehler-Alarmprotokollrahmens, der von dem ersten Knoten gesendet wird, sobald er den Verbindungsfehler erkennt, eine erste Knotennummer des ersten Knotens, die in dem empfangenen Verbindungsfehler-Alarmprotokollrahmen übertragen wird, welcher von dem ersten Knoten gesendet wird, mit einer zweiten Knotennummer des zweiten Knotens vergleicht, beurteilt, ob ein zweites Vergleichsergebnis eine voreingestellte Bedingung erfüllt, und wenn das zweite Vergleichsergebnis die voreingestellte Bedingung erfüllt, dann den Anschluss öffnet, der durch den zweiten Knoten blockiert ist und mit einem Ende der Verbindung mit dem erkannten Verbindungsfehler verbunden ist.

3. Steuerungsverfahren nach Anspruch 2, wobei die voreingestellte Bedingung darin besteht, dass die in dem empfangenen Verbindungsfehleralarm-Protokollrahmen übertragene Knotennummer größer als eine lokale Knotennummer ist, ein lokaler Knoten den Verbindungsfehler erkennt und der lokale Knoten bereits den Anschluss blockiert, welcher mit dem Ende der Verbindung mit dem erkannten Verbindungsfehler verbunden ist, wobei der lokale Knoten jener Knoten ist, welcher den Vergleichsprozess durchführt.

4. Eine Steuerungsvorrichtung zum Schützen von Konnektivität zwischen Ethernet-Ringnetzwerkknoten einschließlich einer Vielzahl von Knoten, die Operationsverwaltungs- und Wartungs-, OAM-, -Erkennungsrahmen für eine Verbindungsfehlererkennung und eine Vielzahl von Knoten erzeugen und verwenden, welche die für die Verbindungsfehlererkennung verwendeten OAM-Erkennungsrahmen transparent weiterleiten, **dadurch gekennzeichnet, dass** die Steuerungsvorrichtung Folgendes umfasst:
einen ersten Knoten, der OAM-Erkennungsrahmen für die Verbindungsfehlererkennung erzeugt und verwendet, und einen zweiten Knoten, welcher OAM-Erkennungsrahmen für die Verbindungsfehlererkennung erzeugt und verwendet, wobei mindestens ein Knoten vorhanden ist, der die OAM-Erkennungsrahmen, die für eine Verbindungsfehlererkennung zwischen dem ersten Knoten und dem zweiten Knoten verwendet werden, transparent weiterleitet, und kein anderer Knoten vorhanden ist, welcher OAM-Erkennungsrahmen für die Verbindungsfehlererkennung zwischen dem ersten Knoten und dem zweiten Knoten erzeugt und verwendet, und wobei sowohl der erste Knoten wie auch der zweite Knoten eine Verbindungskonnektivitätserkennungseinheit (510), eine Anschlussblockiereinheit (520) bzw. eine Verbindungsfehler-Alarmprotokollsende-/-Empfangseinheit (530) umfassen;
wobei
die Verbindungskonnektivitätserkennungseinheiten (510) sowohl des ersten Knotens als auch des zweiten Knotens so ausgebildet sind, dass sie miteinander zusammenwirken, um eine Verbindungskonnektivität durch Senden und Empfangen der OAM-Erkennungsrahmen zu erkennen,
die Anschlussblockiereinheiten (520) sowohl im ersten Knoten als auch im zweiten Knoten ausgebildet sind, so dass: wenn die Verbindungskonnektivitätserkennungseinheit (510) einen Verbindungsfehler erkennt, indem sie den OAM-Erkennungsrahmen nicht empfängt, die Anschlussblockiereinheit (520) an dem ersten Knoten einen Anschluss des ersten Knotens blockieren wird, der mit einem Ende einer Verbindung mit dem erkannten Verbindungsfehler verbunden ist, und die Anschlussblockiereinheit (520) an dem zweiten Knoten einen Anschluss des zweiten Knotens blockieren wird, der mit dem anderen Ende der Verbindung mit dem erkannten Verbindungsfehler verbunden ist, wobei der erkannte Verbindungsfehler an mindestens einer der folgenden Verbindungen auftritt: a) an einer Verbindung zwischen dem ersten Knoten und dem Knoten, der die OAM-Erkennungsrahmen, die für die Verbindungsfehlererkennung zwischen dem ersten Knoten und dem zweiten Knoten verwendet werden, transparent weiterleitet, und b) an einer Verbindung zwischen dem zweiten Knoten und dem Knoten, der die OAM-Erkennungsrahmen, die für die Verbindungsfehlererkennung zwischen dem ersten Knoten und dem zweiten Knoten verwendet werden, transparent weiterleitet, und c) an einer Verbindung zwischen zwei Knoten, welche die für die Verbindungsfehlererkennung verwendeten OAM-Erkennungsrahmen zwischen dem ersten Knoten und dem zweiten Knoten transparent weiterleiten, und
die Verbindungsfehler-Alarmprotokollrahmen-Sende-/Empfangseinheiten (530) sowohl an dem ersten Knoten als auch an dem zweiten Knoten ausgebildet sind, um Verbindungsfehler-Alarmprotokollrahmen jeweils an andere Knoten zu senden, welche OAM-Erkennungsrahmen zur Verbindungsfehlererkennung erzeugen und verwenden, um einen Masterknoten zu benachrichtigen, eine Schutzumschaltung durchzuführen, wobei der Masterknoten zu einer Ring-Schutzverbindung gehört und aus den Knoten ausgewählt ist, welche OAM-Erkennungsrahmen für die Verbindungsfehlererkennung, mit Ausnahme des ersten Knotens und des zweiten Knotens, erzeugen und verwenden.

5. Steuerungsvorrichtung nach Anspruch 4, wobei sowohl der erste Knoten als auch der zweite Knoten ferner eine Vergleichs- und Beurteilungssteuerungseinheit (540) umfassen, wobei
die Vergleichs- und Beurteilungssteuerungseinheit (540) an dem ersten Knoten ausgebildet ist, um: nach dem Empfangen des Verbindungsfehler-Alarmprotokollrahmens, der von dem zweiten Knoten gesendet wird, sobald er den Verbindungsfehler erkennt, eine zweite Knotennummer des zweiten Knotens, die in dem empfangenen Verbindungsfehler-Alarmprotokollrahmen übertragen wird, welcher von dem zweiten Knoten gesendet wird, mit einer ersten Knotennummer des ersten Knotens zu vergleichen, zu beurteilen, ob ein erstes Vergleichsergebnis eine voreingestellte Bedingung erfüllt, und wenn das erste Vergleichsergebnis die voreingestellte Bedingung erfüllt, dann den Anschluss zu öffnen, der durch den ersten Knoten blockiert ist und mit einem Ende der Verbindung mit dem erkannten Verbindungsfehler verbunden ist, oder
die Vergleichs- und Beurteilungssteuerungseinheit (540) an dem zweiten Knoten ausgebildet ist, um: nach dem Empfangen des Verbindungsfehler-Alarmprotokollrahmens, der von dem ersten Knoten gesendet wird, sobald er den Verbindungsfehler erkennt, eine erste Knotennummer des ersten Knotens, die in dem empfangenen Verbindungsfehler-Alarmprotokollrahmen übertragen wird, welcher von dem ersten Knoten gesendet wird, mit einer zweiten Knotennummer des zweiten Knotens zu vergleichen, zu beurteilen, ob ein zweites Vergleichsergebnis eine voreingestellte Bedingung erfüllt, und wenn das zweite Vergleichsergebnis die voreingestellte Bedingung erfüllt, dann den Anschluss zu öffnen, der durch den zweiten Knoten blockiert ist und mit einem Ende der Verbindung mit dem erkannten Verbindungsfehler verbunden ist.

6. Steuerungsvorrichtung nach Anspruch 5, wobei die voreingestellte Bedingung darin besteht, dass die in dem empfangenen Verbindungsfehleralarm-Protokollrahmen übertragene Knotennummer größer als eine lokale Knotennummer ist, ein lokaler Knoten die Fehlerverbindung erkennt und der lokale Knoten bereits den Anschluss blockiert, welcher mit dem Ende der Verbindung mit dem erkannten Verbindungsfehler verbunden ist, wobei der lokale Knoten jener Knoten ist, welcher den Vergleichsprozess durchführt.

7. Ein Knoten, der die Operationsverwaltungs- und Wartungs-, OAM-, -Erkennungsrahmen für die Verbindungsfehlererkennung erzeugt und verwendet, der so ausgebildet ist, dass er mit einem anderen Knoten zusammenwirkt, welcher OAM-Erkennungsrahmen für die Verbindungsfehlererkennung erzeugt und verwendet, um eine Verbindungskonnektivität zwischen Ethernet-Ringnetzwerkknoten zu erkennen;
wobei die Ethernet-Ringnetzwerkknoten eine Vielzahl von Knoten umfassen, welche OAM-Erkennungsrahmen für die Verbindungsfehlererkennung erzeugen und verwenden und eine Vielzahl von Knoten die OAM-Erkennungsrahmen transparent weiterleiten, welche für die Verbindungsfehlererkennung verwendet werden, und wobei mindestens ein Knoten vorhanden ist, der die OAM-Erkennungsrahmen, die für die Verbindungsfehlererkennung zwischen dem Knoten und dem anderen Knoten verwendet werden, transparent weiterleitet, und kein anderer Knoten vorhanden ist, der OAM-Erkennungsrahmen für die Verbindungsfehlererkennung zwischen dem Knoten und dem anderen Knoten erzeugt und verwendet;
wobei der Knoten OAM-Erkennungsrahmen zur Verbindungsfehlererkennung erzeugt und verwendet, umfassend: eine Verbindungskonnektivitätserkennungseinheit (510), eine Anschlussblockiereinheit (520) und eine Verbindungsfehler-Alarmprotokollrahmen-Sende-/Empfangseinheit (530), wobei:
die Verbindungskonnektivitätserkennungseinheit (510) so ausgebildet ist, dass sie mit dem anderen Knoten zusammenwirkt, um eine Verbindungskonnektivität durch Senden und Empfangen der OAM-Erkennungsrahmen zu erkennen;
wobei die Anschlussblockiereinheit (520) so ausgebildet ist, dass, wenn die Verbindungskonnektivitätserkennungseinheit (510) einen Verbindungsfehler erkennt, indem sie den OAM-Erkennungsrahmen nicht empfängt, einen Anschluss des Knotens blockiert, wobei der Anschluss des Knotens und ein Anschluss des anderen Knotens mit zwei Enden einer Verbindung mit dem jeweils erkannten Verbindungsfehler verbunden ist, und wobei der erkannte Verbindungsfehler an mindestens einer der folgenden Verbindungen auftritt: a) einer Verbindung zwischen dem ersten Knoten und dem Knoten, der die OAM-Erkennungsrahmen transparent weiterleitet, welche für die Verbindungsfehlererkennung zwischen dem ersten Knoten und dem zweiten Knoten verwendet wird, b) einer Verbindung zwischen dem zweiten Knoten und dem Knoten, welcher die OAM-Erkennungsrahmen, die für die Verbindungsfehlererkennung zwischen dem ersten Knoten und dem zweiten Knoten verwendet werden, transparent weiterleitet, und c) einer Verbindung zwischen zwei Knoten, welche die OAM-Erkennungsrahmen, die für die Verbindungsfehlererkennung zwischen dem ersten Knoten und dem zweiten Knoten verwendet werden, transparent weiterleiten, und
die Verbindungsfehler-Alarmprotokollrahmen-Sende-/Empfangseinheit (530) ausgebildet ist, um Verbindungsfehler-Alarmprotokollrahmen jeweils an andere Knoten zu senden, die OAM-Erkennungsrahmen zur Verbindungsfehlererkennung erzeugen und verwenden, um einen Masterknoten zu benachrichtigen, eine Schutzumschaltung durchzuführen, wobei der Masterknoten zu einer Ring-Schutzverbindung gehört und aus den Knoten ausgewählt ist, welche OAM-Erkennungsrahmen für die Verbindungsfehlererkennung, mit Ausnahme des Knotens und des anderen Knotens, erzeugen und verwenden.

## Revendications

1. Méthode de gestion pour la protection de la connectivité entre des noeuds d'un réseau Ethernet en anneau comprenant une pluralité de noeuds produisant et utilisant des trames de détection de gestion de fonctionnement et de maintenance (OAM) pour la détection de défauts de liaison, et une pluralité de noeuds transparents transmettant les trames de détection OAM utilisées pour la détection de défauts de liaison, **caractérisée en ce que** la méthode de gestion comprend :
un premier noeud générant et utilisant des trames de détection OAM pour la détection de défauts de liaison interagissant avec un deuxième noeud générant et utilisant des trames de détection OAM pour la détection de défauts de liaison par les trames de détection OAM, afin de détecter la connectivité des liens, dans lequel il y a au moins un noeud transparent transmettant les trames de détection OAM utilisées pour la détection de défauts de liaison entre le premier noeud et le deuxième noeud, et il n'y a aucun autre noeud générant et utilisant des trames de détection OAM pour la détection de défauts de liaison entre le premier noeud et le deuxième noeud ;
lorsque le premier noeud et le deuxième noeud détectent un défaut de liaison en ne recevant pas la trame de détection OAM, en bloquant un port du premier noeud et un port du deuxième noeud, les deux ports étant connectés à deux extrémités d'une liaison avec le défaut de liaison détecté respectivement, et le défaut de liaison détecté se produisant sur au moins une des liaisons suivantes : a) une liaison entre le premier noeud et le noeud transparent transmettant les trames de détection OAM utilisées pour la détection de défauts de liaison entre le premier noeud et le deuxième noeud, b) une liaison entre le deuxième noeud et le noeud transparent transmettant les trames de détection OAM utilisées pour la détection de défauts de liaison entre le premier noeud et le deuxième noeud, et c) une liaison entre deux noeuds transparents transmettant les trames de détection OAM utilisées pour la détection de défauts de liaison entre le premier noeud et le deuxième noeud ; et
le premier noeud et le deuxième noeud transmettant respectivement des trames de protocole d'alarme de défaut de liaison à d'autres noeuds générant et utilisant des trames de détection OAM pour la détection de défauts de liaison dans le réseau Ethernet en anneau, afin de notifier un noeud principal pour effectuer une commutation de protection, le noeud principal appartenant à une liaison de protection annulaire et étant sélectionné parmi les noeuds générant et utilisant des trames de détection OAM pour la détection de défauts de liaison excepté pour le premier noeud et le deuxième noeud.

2. Méthode de gestion selon la revendication 1, comprenant en outre :
le premier noeud, après avoir reçu la trame de protocole d'alarme de défaut de liaison envoyée par le deuxième noeud lors de la détection du défaut de liaison, comparé un numéro de deuxième noeud du deuxième noeud porté dans la trame de protocole d'alarme de défaut de liaison reçue, envoyée par le deuxième noeud avec un numéro de premier noeud du premier noeud, établi si le résultat d'une première comparaison est conforme à une condition préréglée, et, si le résultat de la première comparaison est conforme à la condition préréglée, ouvert le port obturé par le premier noeud et relié à une extrémité de la liaison avec le défaut de liaison détecté ; ou
le deuxième noeud, après avoir reçu la trame de protocole d'alarme de défaut de liaison envoyée par le premier noeud lors de la détection du défaut de liaison, comparé un numéro de premier noeud du premier noeud porté dans la trame de protocole d'alarme de défaut de liaison reçue, envoyée par le premier noeud avec un numéro de deuxième noeud du deuxième noeud, établi si le résultat d'une deuxième comparaison est conforme à la condition préréglée, et, si le résultat de la deuxième comparaison est conforme à la condition prédéfinie, ouvert le port obturé par le deuxième noeud et relié à l'autre extrémité de la liaison avec le défaut de liaison détecté.

3. Méthode de gestion selon la revendication 2, la condition prédéfinie étant que le numéro de noeud porté dans la trame de protocole d'alarme de défaut de liaison reçu est supérieur à un numéro de noeud local, un noeud local détecte le défaut de liaison, et le noeud local bloque déjà le port connecté sur l'extrémité de la liaison avec le défaut de liaison détecté, le noeud local étant le noeud effectuant le processus de comparaison.

4. Appareil de gestion pour la protection de la connectivité entre les noeuds du réseau Ethernet en anneau, y compris une pluralité de noeuds produisant et utilisant des trames de détection de gestion de fonctionnement et de maintenance (OAM) pour la détection de défauts de liaison, et une pluralité de noeuds transparents transmettant les trames de détection OAM utilisées pour la détection de défauts de liaison, **caractérisé en ce que** l'appareil de gestion comprend :
un premier noeud générant et utilisant des trames de détection OAM pour la détection de défauts de liaison, et un deuxième noeud générant et utilisant des trames de détection OAM pour la détection de défauts de liaison, dans lequel il y a au moins un noeud transparent transmettant les trames de détection OAM utilisées pour la détection de défauts de liaison entre le premier noeud et le deuxième noeud, et il n'y a aucun autre noeud générant et utilisant des trames de détection OAM pour la détection de défauts de liaison entre le premier noeud et le deuxième noeud ; et le premier noeud et le deuxième noeud comprenant tous les deux un détecteur de connectivité de liaison (510), un dispositif de blocage de port (520), et un émetteur-récepteur de trame de protocole d'alarme de défaut de liaison (530) respectivement ;
dans lequel
les détecteurs de connectivité de liaison (510) dans le premier noeud et le deuxième noeud sont configurés pour interagir entre eux pour détecter une connectivité de liaison en envoyant et en recevant les trames de détection OAM,
les dispositifs de blocage de port (520) dans le premier noeud et le deuxième noeud sont configurés de sorte que : lorsque le détecteur de connectivité de liaison (510) détecte un défaut de liaison car il ne reçoit pas la trame de détection OAM, le dispositif de blocage de port (520) dans le premier noeud bloque un port du premier noeud connecté à une extrémité d'une liaison avec le défaut de liaison détecté, et le dispositif de blocage de port (520) dans le deuxième noeud bloque un port du deuxième noeud connecté à l'autre extrémité de la liaison avec le défaut de liaison détecté ; le défaut de liaison détecté se produisant sur au moins une des liaisons suivantes : a) une liaison entre le premier noeud et le noeud transparent transmettant les trames de détection OAM utilisées pour la détection de défauts de liaison entre le premier noeud et le deuxième noeud, b) une liaison entre le deuxième noeud et le noeud transparent transmettant les trames de détection OAM utilisées pour la détection de défauts de liaison entre le premier noeud et le deuxième noeud, et c) une liaison entre deux noeuds transparents transmettant les trames de détection OAM utilisées pour la détection de défauts de liaison entre le premier noeud et le deuxième noeud ; et
les émetteurs-récepteurs de trame de protocole d'alarme de défaut de liaison (530) dans le premier noeud et le deuxième noeud étant configurés pour transmettre des trames de protocole d'alarme de défaut de liaison respectivement à d'autres noeuds générant et utilisant des trames de détection OAM pour la détection de défauts de liaison, afin de notifier à un noeud principal d'effectuer une commutation de protection, le noeud principal appartenant à une liaison de protection annulaire, et étant sélectionné parmi les noeuds générant et utilisant des trames de détection OAM pour la détection de défauts de liaison excepté pour le premier noeud et le deuxième noeud.

5. Appareil de gestion selon la revendication 4, le premier noeud et le deuxième noeud comprenant en outre un dispositif de commande de comparaison et jugement (540), dans lequel
le dispositif de commande de comparaison et jugement (540) dans le premier noeud étant configuré pour comparer, après la réception d'une trame de protocole d'alarme de défaut de liaison envoyée par le deuxième noeud lors de la détection du défaut de liaison, un numéro de deuxième noeud du deuxième noeud porté dans la trame de protocole d'alarme de défaut de liaison reçue envoyée par le deuxième noeud avec un numéro de premier noeud du premier noeud, juger si le résultat d'une première comparaison répond à une condition préétablie, et le résultat de la première comparaison répond à la condition préétablie, ouvrir le port obturé par le premier noeud et relié à l'extrémité de la liaison avec le défaut de liaison détecté ; ou
le dispositif de commande de comparaison et jugement (540) dans le deuxième noeud étant configuré pour comparer, après la réception d'une trame de protocole d'alarme de défaut de liaison envoyée par le premier noeud lors de la détection du défaut de liaison, un numéro de premier noeud du premier noeud porté dans la trame de protocole d'alarme de défaut de liaison reçue, envoyée par le premier noeud avec un numéro de deuxième noeud du deuxième noeud, juger si le résultat d'une deuxième comparaison répond à la condition préétablie, et le résultat de la deuxième comparaison répond à la condition préétablie, ouvrir alors le port obturé par le deuxième noeud et relié à l'autre extrémité de la liaison avec le défaut de liaison détecté.

6. Appareil de gestion selon la revendication 5, la condition préétablie étant que le numéro de noeud porté dans la trame de protocole d'alarme de défaut de liaison reçue est supérieur à un numéro de noeud local, un noeud local détecte le défaut de liaison et le noeud local obture déjà le port connecté à l'extrémité de la liaison avec le défaut de liaison détecté, le noeud local étant le noeud effectuant le procédé de comparaison.

7. Un noeud générant et utilisant des trames de détection de gestion de fonctionnement et de maintenance (OAM) pour la détection de défauts de liaison, configuré pour interagir avec un autre noeud générant et utilisant des trames de détection de détection OAM pour la détection de défauts de liaison, afin de détecter une connectivité de liaison entre des noeuds de réseau annulaire Ethernet ;
les noeuds de réseau annulaire Ethernet comprenant une pluralité de noeuds générant et utilisant des trames de détection OAM pour la détection de défauts de liaison, et une pluralité de noeuds transparents transmettant les trames de détection OAM utilisées pour la détection de défauts de liaison ; et au moins un noeud transparent transmettant les trames de détection OAM utilisées pour la détection de défauts de liaison entre ledit noeud et ledit un autre noeud, et aucun autre noeud générant et utilisant des trames de détection OAM pour la détection de défauts de liaison entre ledit noeud et ledit un autre noeud ;
ledit noeud générant et utilisant des trames de détection OAM pour la détection de défauts de liaison comprenant : un détecteur de connectivité de liaison (510), un dispositif de blocage de port (520), et un émetteur-récepteur de trame de protocole d'alarme de défaut de liaison (530),
le détecteur de connectivité de liaison (510) étant configuré pour interagir avec ledit un autre noeud pour détecter une connectivité de liaison en envoyant et en recevant les trames de détection OAM ;
le dispositif de blocage de port (520) étant configuré pour, lorsque le détecteur de connectivité de liaison (510) détecte un défaut de liaison car il ne reçoit pas la trame de détection OAM, bloquer un port dudit noeud, le port dudit noeud et un port d'un autre noeud étant connectés aux deux extrémités d'une liaison avec le défaut de liaison détecté respectivement, et le défaut de liaison détecté se produisant sur au moins une des liaisons suivantes : a) une liaison entre le premier noeud et le noeud transparent transmettant les trames de détection OAM utilisées pour la détection de défauts de liaison entre le premier noeud et le deuxième noeud, b) une liaison entre le deuxième noeud et le noeud transparent transmettant les trames de détection OAM utilisées pour la détection de défauts de liaison entre le premier noeud et le deuxième noeud, et c) une liaison entre deux noeuds transparents transmettant les trames de détection OAM utilisées pour la détection de défauts de liaison entre le premier noeud et le deuxième noeud ; et
l'émetteur-récepteur de trame de protocole d'alarme de défaut de liaison (530) étant configuré pour transmettre des trames de protocole d'alarme de défaut de liaison respectivement à d'autres noeuds générant et utilisant des trames de détection OAM pour la détection de défauts de liaison, afin de notifier à un noeud principal d'effectuer une commutation de protection, le noeud principal appartenant à une liaison de protection annulaire, et étant sélectionné parmi les noeuds générant et utilisant des trames de détection OAM pour la détection de défauts de liaison excepté pour ledit noeud et ledit un autre noeud.
